# EUROPEAN PATENT SPECIFICATION

(11) **EP 1 169 400 B1**
(45) Date of publication and mention of the grant of the patent: **13.08.2003**
(21) Application number: 00912606.1
(22) Date of filing: 14.03.2000
(51) Int. Cl.: C09D 195/00, F16L 58/10

(54) **PIPE COATINGS**
ROHRLEITUNGSBESCHICHTUNGEN
REVETEMENT POUR TUYAU

(30) Priority: 16.03.1999 EP 99302036
(43) Date of publication of application: 09.01.2002
(73) Proprietor: SHELL INTERNATIONALE RESEARCH MAATSCHAPPIJ B.V., 2596 HR Den Haag (NL)
(72) Inventor: HEIMERIKX, Gerardus, Wilhelmus, Jozef, NL-1031 CM Amsterdam (NL); DE KONING, Thomas, Cornelis, NL-1031 CM Amsterdam (NL)
(86) International application number: EP0002273
(87) International publication number: WO00055271

(56) References cited:
- WO-A-92/06141
- WO-A-96/07846
- DE-A- 19 601 285
- US-A- 2 700 655
- US-A- 4 994 508
- US-A- 5 036 119

## Description

This invention relates to pipe coatings and a process for preparing coated pipes.

Pipelines are efficient means for the transportation of gaseous, liquid and slurried materials over long or short distances with the minimum impact on the environment. Long and large diameter pipelines are usually made from carbon steel, an iron based material which is subject to corrosion. The corrosion process is a naturally occurring one in which the iron, one of the most reactive elements, reverts to its oxide through the effects of water and oxygen from the air. This process effects nearly all iron structures, above ground, below ground and in water. Structures which are accessible and above ground may be maintained by regular painting or by some other form of coating. Pipelines are, however, rarely accessible and must be protected from their environment for the whole of their service life by a suitable corrosion resistant coating. One commonly used means of corrosion protection is the use of a thick bituminous enamel coating optionally reinforced with a glass fibre, polyester or concrete wrap. As further insurance against corrosion such a high integrity coating can further be supported by the use of cathodic protection.

Pipe coatings can further be used for making pipes waterproof, for insulation or to protect against indentation.

Whilst bitumen is in many respects naturally suitable for use in pipe coating, it is inherently deficient in some physical properties which it would be highly desirable to improve.

Bitumens to be used in pipe coatings must meet a particularly stringent set of requirements.
In particular, it is advantageous if a bitumen composition for use as a pipe coating has a good high temperature performance. This makes that the piping can (occasionally) carry hot materials. In such conditions, the bitumen composition tends to sag or slip from the piping. Sag or slip occurs when the bitumen composition does not have a high enough flow resistance. It leads to deformation of the pipe coating and to a loss of performance.

As described in WO 92/06141, bitumen compositions prepared for use in pipe coatings commonly contain a non-hydrogenated styrene-butadiene-styrene block copolymer additive. These additives have the disadvantage that the flow resistance of the compositions is not always adequate

Surprisingly, it has now been found that bitumen compositions having a high resistance to flow at high temperature and high softening point are obtainable by mixing a premixed additive comprising a block copolymer, carbon black, and a mixing aid, with a bitumen.

US 5,036,119 discloses blending carbon black with a block copolymer and combining the carbon black copolymer mixture with bitumen. This document does neither disclose nor teach that such bitumen composition can advantageously be used in pipe coatings.

The present invention provides a pipe coating comprising a bitumen composition obtainable by mixing bitumen and a premixed additive comprising,
i) from 20 to 90% by weight of one or more block copolymers of a vinyl aromatic hydrocarbon and a conjugated diene based on total additive,
ii) from 1 to 20% by weight of carbon black, based on total additive, and
iii) from 10 to 70% by weight of a mixing aid, based on total additive,
wherein the bitumen composition may optionally comprise a filler, and wherein the total amount of i), ii) and iii) does not exceed 100% by weight of the premixed additive.

The present invention further relates to a process for preparing coated pipes comprising,
(a) mixing i) from 1 to 20% by weight of carbon black, ii)from 20 to 90% by weight of one or more block copolymers of a vinyl aromatic hydrocarbon and a conjugated diene, and iii) from 10 to 70% by weight of a mixing aid,
(b) mixing the premixed additive obtained in (a) with a bitumen and optionally filler, and
(c) use of the bitumen composition of step (b) in coating a pipe.

Furthermore, the present invention relates to a pipe coated with a coating according to the present invention.

The bitumen in the compositions according to the present invention may be a naturally occurring bitumen or a bitumen derived from a mineral oil. Also, petroleum derivatives obtained by a cracking process, pitch and coal tar can be used as the bitumen as well as blends of various bitumens.

Examples of suitable bitumens include distillation or "straight-run" bitumens, precipitation bitumens, e.g. propane bitumens, blown bitumens and mixtures thereof. Other suitable bitumens include mixtures of one or more of these bitumens with extenders such as petroleum extracts, e.g. aromatic extracts, distillates or residues, or with oils.

Preferred bitumens are bitumens having a penetration of between 5 and 100 dmm (measured according to ASTM D5-94), more preferably bitumens having a penetration between 10 dmm and 90 dmm, more preferably between 15 dmm and 50 dmm.

The block copolymers for use in the present invention can be prepared using anionic initiators or polymerization catalysts. Such polymers may be prepared using bulk, solution or emulsion techniques. Such polymers are available commercially from several suppliers.

In general, when solution anionic techniques are used, block copolymers of conjugated diene and vinyl aromatic hydrocarbons are prepared by contacting the monomers to be polymerized sequentially with an anionic polymerization initiator such as group IA metals, their alkyls, amides, silanolates, napthalides, biphenyls or anthracenyl derivatives. It is preferred to use an organoalkali metal (such as sodium or potassium) compound in a suitable solvent at a temperature in the range from -150 °C to 300 °C, preferably at a temperature in the range from 0 °C to 100 °C. Particularly effective anionic polymerization initiators are organolithium compounds having the general formula:

RLiₙ

wherein R is an aliphatic, cycloaliphatic, aromatic or alkyl-substituted aromatic hydrocarbon radical having from 1 to 20 carbon atoms and n is an integer of 1 to 4.

Conjugated dienes which may be polymerized anionically include those conjugated dienes containing from 4 to 24 carbon atoms such as 1,3-butadiene, isoprene, piperylene, methylpentadiene, phenyl-butadiene, 3,9-dimethyl-1,3-hexadiene, and 9,5-diethyl-1,3-octadiene. Preferred conjugated dienes are those containing from 4 to 8 carbon atoms. Examples of such conjugated diene monomers include: 1,3-butadiene (butadiene), 2-methyl-1,3-butadiene(isoprene), 2,3-dimethyl-1,3-butadiene, 1,3 pentadiene(piperylene) and 1,3-hexadiene. Isoprene and butadiene are the most preferred conjugated diene monomers for use in the present invention because of their low cost and ready availability. Vinyl aromatic hydrocarbons which may be copolymerized include vinyl aryl compounds such as styrene, C₁-C₄ alkyl-substituted styrene, C₁-C₄ dialkyl-substituted styrene, C₁-C₄ alkoxy-substituted styrene, vinyl napthalene, and C₁-C₄ alkyl-substituted vinyl napthalene.

The block copolymers may be produced by any well known block polymerization or copolymerization procedure including the well-known sequential addition of monomer techniques, incremental addition of monomer technique or coupling technique. As is well known in the block copolymer art, tapered copolymer blocks can be incorporated in the multiblock copolymer by copolymerizing a mixture of conjugated diene and vinyl aromatic hydrocarbon monomers utilizing the difference in their copolymerization reactivity rates.

The block copolymers of the present invention may be hydrogenated or non-hydrogenated.

The block copolymers for use in the present invention may be linear or radial and typically have the structure A-B-A or (A-B)nY, with n being an integer from 2 to 100, preferably 2 to 20, more preferably 2 to 6 and Y being the residue of a coupling agent; wherein A is a polyvinyl aromatic hydrocarbon) block and B is a poly-(conjugated diene) block.

Linear block copolymers which may be utilized in the present invention may be represented by the following general formula:

A_{z}-(B-A)_{y}-Bₓ

[Bₓ-(A-B)_{y}-A_{z}]ₙ-C; and

[Bₓ-(A-B)_{y}-A_{z}]_{n'}-C-[B']_{n"}

wherein:
A is a block of vinyl aromatic hydrocarbons;
B is a block of conjugated dienes or its hydrogenated derivative;
x and z are, independently, 0 or 1; and n is 2 and n' and n" are both 1;
y is an integer ranging from 1 to about 15;
C is the core of the linear polymer formed with a difunctional coupling agent; and
B' is a block of conjugated dienes which B' may be the same or different from B.

If y is 1, z is preferably 1 too.

Radial polymers which may be utilized in this invention may be represented by the following general formula:

[Bₓ-(A-B)_{y}-A_{z}]ₙ-C; and

[Bₓ-(A-B)_{y}-A_{z}]_{n'}-C-[B']_{n"}

wherein
A, B, x, y and z are as previously defined;
z is preferably 0;
n is a number from 3 to 30;
C is the core of the radial polymer formed with a polyfunctional coupling agent;
B' is a block of conjugated dienes which B' may be the same or different from B; and
n' and n" are integers representing the number of each type of arm and the sum of n' and n" will be from 3 to 30.

It is preferred that the A blocks have an apparent weight average molecular weight between 3000 and 70,000 each while the block B preferably each have an apparent weight average molecular weight between 10,000 and 300,000. It is more preferred that the A blocks each have an apparent weight average molecular weight between 5,000 and 50,000, and each B block has an apparent weight average molecular weight between 15,000 and 200,000. It is most preferred that the A blocks each have an apparent weight average molecular weight between 7,000 and 30,000, and each B block has an apparent weight average molecular weight between 45,000 and 120,000.

Blocks A and B may be either homopolymer, random or tapered copolymer blocks as long as each block is predominantly the class of the monomer characterizing the block. For example, the block copolymer may contain A blocks which are styrene/alpha-methylstyrene copolymer blocks or styrene/butadiene random or tapered copolymer blocks as long as the blocks individually predominate in vinyl aromatic hydrocarbons. The blocks are preferably monovinyl monocyclic arenes such as styrene and alphamethylstyrene, and styrene is particularly preferred.

By predominantly being the class of the monomer characterizing the block, it is meant that more than 75% by weight of the A blocks are vinyl aromatic monomer units, and more than 75% by weight of the B blocks are conjugated diene monomer units.

The blocks B may comprise homopolymers of conjugated diene monomers, copolymers of two or more conjugated dienes, and copolymers of one or more of the dienes with a vinyl aromatic hydrocarbon as long as the blocks B are predominantly conjugated diene units.

The vinyl aromatic hydrocarbon blocks, e.g., polystyrene blocks, preferably comprise between about 5 and about 50% by weight of the total block copolymer, more preferably comprise between about 25 and 35% by weight of the total block copolymer and most preferably comprise between about 28 and about 32% by weight of the total block copolymer.

Non-hydrogenated block copolymers tend to be sensitive to oxidation. This can be minimized by hydrogenating the copolymers, especially in the diene blocks. The hydrogenation of these block copolymers may be carried out by a variety of well established processes including hydrogenation in the presence of such catalysts as Raney Nickel, noble metals such as platinum, and palladium and soluble transition metal catalysts. Titanium biscyclopentadienyl catalysts may also be used. Suitable hydrogenation processes which can be used are ones wherein the diene-containing polymer or copolymer is dissolved in an inert hydrocarbon diluent such as cyclohexane and hydrogenated by reaction with hydrogen in the presence of a soluble hydrogenation catalyst. Such processes are e.g. disclosed in U.S. Patent Nos. 3,113,986; 4,226,952; Reissue 27,145; 3,595,942; 3,700,633; 5,925,717; 5,814,709; 5,886,107; and 5,952,430. The polymers are typically hydrogenated in such a manner as to produce hydrogenated block copolymers having a residual unsaturation content in the polydiene block of less than 20%, preferably less than 10%, more preferably less than 5% and most preferably as close to zero percent as possible, of their original ethylenic unsaturation content prior to hydrogenation.

The apparent weight average molecular weights of linear polymers or unassembled linear segments of polymers such as mono-, di-, triblock, etc., arms of star polymers before coupling are conveniently determined by Gel Permeation Chromatography (GPC), where the GPC system has been appropriately calibrated with polystyrene standards of known molecular weight (ASTM D3536). The term "apparent" weight average molecular weight is used because the molecular weight of the block copolymer is determined using polystyrene homopolymer standards.

The mixing aid of the present invention is present to stabilise the premixed additive. Any compound which functions as such, can be used.

The mixing aid of the present invention may typically be an amorphous polyolefin or an oil.

When the mixing aid of the present invention is an oil it may be either a naphthenic oil, a paraffinic oil, or an oil comprising both naphthenics and paraffins. Preferably, the oil comprises a mixture of naphthenics and paraffins and has a paraffin content of 20-70 %wt, more preferably 40-60 %wt.

Preferably, the mixing aid of the present invention is an amorphous polyolefin. The polyolefin should be of sufficiently high viscosity to limit migration and bleeding and of sufficiently low viscosity for facile processing. The viscosity of the amorphous polyolefin as measured on a Brookfield viscometer is preferably less than 100,000 cps (centipoise) at 190 °C and preferably greater than 100,000 cps at 38 °C. Preferably, the polyolefin is amorphous as crystalline polyolefins tend to less easily form phase stable blends. For the purpose of this invention amorphous is defined as having a crystallinity of less than 10% as determined by small angle x-ray diffraction. Suitable polymers for this invention include polyethylene-propylene, atactic polypropylene, polyethylene-1-butene, a random copolymer of ethylene and a higher alpha olefin, and polyisobutylene. The amorphous polyolefin is preferably an atactic polypropylene.

The carbon black which may be used in the present invention preferably has a particle size from 5 to 500 nanometers. Preferred carbon blacks are those of ASTM grades N660, N550, N330, N110, N220, N761, N762, N601, 5300 and 5301. Most preferred carbon blacks are N-110 (ASTM D2516) type carbon blacks.

The weight ratio of block copolymer to carbon black may vary from 0.01 to 500. Preferably, the ratio is 1.0 to 100 and most preferably is 4 to 7. The amount of carbon black utilized is most preferably between 5 and 20% by weight of the amount of bitumen and block copolymer.

Carbon blacks are typically commercially available in pellet form, with particles bound into larger pellets to enhance handling. Commercial binders include naphthenic oils and diblock copolymers of vinyl arenes and conjugated diolefins. The particular binder used is not critical to the practice of the present invention. Preferably, the carbon black composition does not contain more than 10% by weight of bitumen, the percent weight based on the total carbon black composition. If a significant amount of bitumen is present in the carbon black before the carbon black is admixed with the block copolymer the advantages of the present invention might not be realized. Preferably, less than 10 percent by weight of the carbon black mixture is bitumen, and more preferably, less than 5 percent by weight of the carbon black mixture is bitumen.

The premixed additive of the present invention comprises from 20 to 90%, preferably 45 to 80%, by weight of one or more block copolymers of a vinyl aromatic hydrocarbon and a conjugated diene; from 10 to 70%, preferably 10 to 40% by weight of a mixing aid; and from 1 to 20%, preferably 5 to 20% by weight of carbon black.

The carbon black must be present in an amount of at least 1% or little benefit for stabilization and compatibilization is realized. If more than 20% is used, little additional benefit is seen and melt processing becomes unduly difficult.

According to the present invention, the amount of premixed additive mixed with the bitumen may vary between wide limits. Preferably from 2 to 80% by weight, and more preferably from 5 to 40% by weight of premixed additive is used, based on the final bitumen composition. If less than 20% of bitumen is used, the bitumen composition tends to be difficult to produce by conventional techniques. If more than 98% is used, little benefit is often derived from the addition of the compound.

The premixed additive may be mixed with the bitumen by any conventional method known to those skilled in the art. Typically, the premixed additive is mixed at a temperature of between 150 °C and 200 °C, preferably between 160 °C and 190 °C, for a time of between 1 and 4 hours, preferably 1 and 2 hours.

In a preferred embodiment of the present invention, the conjugated diene block of the block copolymer of the premixed additive has been hydrogenated. Preferably, from 70 to 99.9 %wt of the olefinic unsaturation in the conjugated diene block has been hydrogenated.

According to this embodiment the block copolymer has an apparent weight average molecular weight of preferably from 80,000 to 300,000 g/mol.

If a mixing aid other than oil is present, the premixed additive preferably contains substantially no oil, that is has an oil content of less than 2% by weight, more preferably less than 1% by weight, even more preferably less than 0.5% by weight.

Free carbon black is very difficult to handle. Its fine particle size, polarity, and electrical conductivity make it a severe nuisance dust. To overcome this problem, the carbon black may be preblended with part or all of the mixing aid to form a masterbatch prior to compounding with the block copolymer. This preblending may be accomplished at a temperature where the mixing aid is in a liquid state in blending equipment such as a ribbon blender, a drum mixer, or other conventional equipment.

The bitumen compositions of the present invention may additionally contain up to 50%, preferably 15 to 40%, more preferably 25 to 35% by weight of one or more fillers. For the purposes of the present application the filler is considered to be part of the bitumen composition. Fillers which can be used are for example, glass fibre, slate powder, talc, calcium carbonate and carbon black. Other components including resins, such as endblock resins or tackifying resins; stabilisers; or flame retardants may be incorporated. Other polymer modifiers may also be included in the bitumen composition of the invention.

Preferably, filler is added after addition of the premixed additive.

The bitumen compositions according to the present invention are used in coating pipes. They show good high temperature performance, generally having a softening point of at least 100 °C (measured according to IP/58), preferably at least 125 °C and a flow point of at least 100 °C (measured according to DIN 52123), preferably at least 110 °C.

The bitumen compositions according to the present invention can be used for coating pipe of any type of material, such as for instance, iron, steel, and other metals and alloys, as well as concrete.

Examples of materials where the bitumen compositions according to the invention can be used are steel pipes to be used as pipelines for oil and gas.

The present invention provides a method for coating pipes with the said bitumen compositions. According to this method the bitumen compositions may be applied directly to the pipe or optionally to a pipe precoated with a primer.

A conventional method of coating pipes starts with priming with a primer followed by application of a bitumen enamel or a tar enamel, while optionally one or more layers of wrapping material are applied simultaneously to the liquid enamel. The method can be terminated by application of an additional layer of wrapping material. For pipes to be used offshore, a final concrete coating is generally applied for protection of the pipe and for counter-acting buoyancy, especially when said pipe is empty.

The bitumen compositions of the present invention are illustrated by the following examples.

### Examples

Two premixed additives were prepared and subsequently blended with bitumens to provide bitumen compositions for use in pipe coatings according to the present invention.

Premixed additive A). 15 %wt Vulcan 9A32 carbon black was mixed with 35 %wt E1200 amorphous polyolefin and 50 %wt hydrogenated styrene-butadiene-styrene linear block copolymer having an apparent weight average molecular weight of 189,000 and a polystyrene content of 31 %wt (KRATON G-1654).

Premixed additive B). 15 %wt of Vulcan 9A32 carbon black was premixed with 35 %wt SHELLFLEX 371 oil and 50 %wt of non-hydrogenated styrene-butadiene-styrene radial block copolymer having an apparent weight average molecular weight of 420,000, a polystyrene content of 30% by weight (KRATON D-1184).

Vulcan 9A32 carbon black was obtained from Cabot (Vulcan is a trade mark), E1200 amorphous polyolefin was obtained from Eastman, and SHELLFLEX 371 oil and KRATON thermoplastic rubbers were obtained from Shell Chemicals, (SHELLFLEX and KRATON are trade marks).

The premixed additives A and B were mixed with bitumen in a high shear mixer. The bitumen was heated to a temperature of 160 °C and subsequently the premixed additive was added. During addition of the premixed additive the temperature increased to 180 °C, which is caused by the energy input of the high shear mixer. Blending was continued until a homogeneous blend was obtained, which was after approximately one hour.

The bitumens used were:-
1. bitumen 1 obtained by propane precipitation and having a penetration value of 12 dmm at 25 °C,
2. bitumen 2 having a penetration of 27 dmm at 25 °C and a softening point (IP/58) of 54 °C, and,
3. bitumen 3 having a penetration of 37 dmm at 25 °C and a softening point (IP/58) of 53 °C.

After high shear blending, the products were finished by adding at 180 °C a slate dust filler with a low shear mixer for approximately half an hour.

The bitumen compositions were tested according to the following methods. The results are shown in Table 1.

Examples 1 and 2 comprise premixed additive A, blended with bitumen 2 and bitumen 3 respectively.

For the purpose of comparison, the hydrogenated styrene-butadiene-styrene linear block copolymer of premixed additive A (Kraton G-1654) was blended directly with bitumen 2 in the absence of carbon black and mixing aid.

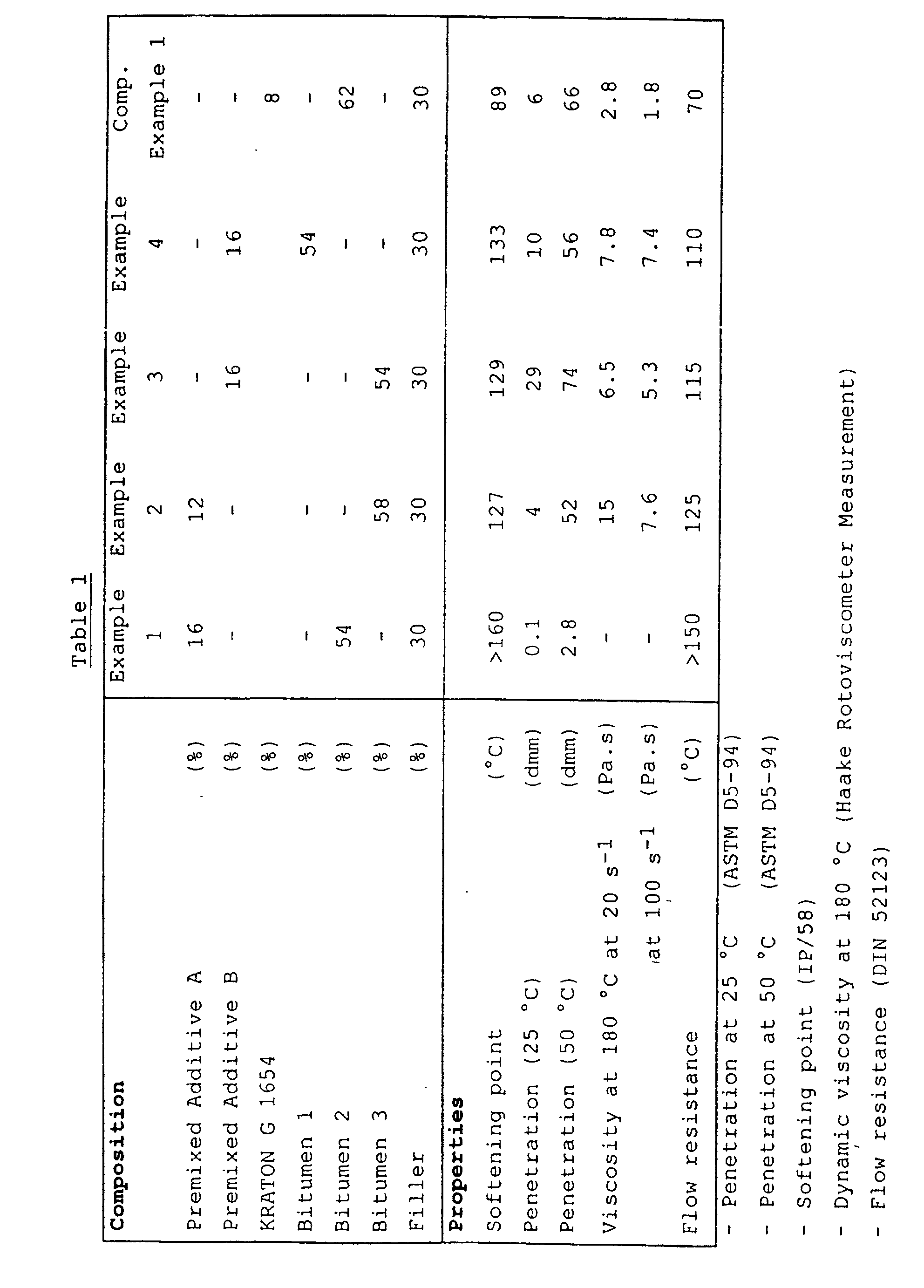

From Table 1 it can be seen that that the bitumen compositions have a good high temperature performance with softening points of at least 125 °C and a flow resistance of at least 110 °C. The relatively high penetration value of Example 3 is due to the presence of oil in the premixed additive. Example 4, shows that bitumen compositions of lower penetration are attainable using premixed additive B in combination with a bitumen obtained by propane precipitation.

It can be seen that the composition of Comparative Example 1 has poor high temperature performance.

The bitumen compositions of the present invention have excellent high temperature properties and are suitable for use as pipe coatings. The increased flow resistance of the compositions means that pipes coated with compositions can be conveniently used to carry high temperature liquids.

## Claims

1. A pipe coating comprising a bitumen composition obtainable by mixing bitumen and a premixed additive comprising,
i) from 20 to 90% by weight of one or more block copolymers of a vinyl aromatic hydrocarbon and a conjugated diene based on total additive.
ii) from 1 to 20% by weight of carbon black, based on total additive, and
iii) from 10 to 70% by weight of a mixing aid, based on total additive,
wherein the bitumen composition may optionally comprise a filler, and wherein the total amount of i), ii) and iii) does not exceed 100% by weight of the premixed additive.

2. A pipe coating according to claim 1 wherein the bitumen composition comprises from 20 to 98% by weight of bitumen, from 5 to 40% by weight of a premixed additive, and up to 50% by weight of a filler, all based on total bitumen composition.

3. A pipe coating according to claim 1 or 2 comprising a bitumen composition having a softening point (measured according to IP/58) of at least 100 °C and a flow resistance (measured according to DIN 52123) of at least 100 °C.

4. A pipe coating according to any one of claims 1 to 3 comprising a bitumen composition wherein the conjugated diene block of the block copolymer is hydrogenated.

5. A pipe coating according to claim 4 comprising a bitumen composition wherein the block copolymer has an apparent weight average molecular weight of from 80,000 to 300,000.

6. A pipe coating according to claim 4 or 5 comprising a bitumen composition wherein the mixing aid is atactic polypropylene.

7. A pipe coating according to any one of claims 1 to 3 comprising a bitumen composition wherein the conjugated diene block of the block copolymers is non-hydrogenated.

8. A process for preparing a coated pipe comprising,
(a) mixing i) from 1 to 20% by weight of carbon black, ii) from 20 to 90% by weight of one or more block copolymers of a vinyl aromatic hydrocarbon and a conjugated diene, and iii) from 10 to 70% by weight of a mixing aid,
(b) mixing the premixed additive obtained in (a) with bitumen and optionally filler, and
(c) use of the bitumen composition of step (b) in coating a pipe.

9. A pipe coated with a coating as described in any one of claims 1-7.

## Patentansprüche

1. Rohrbeschichtung, umfassend eine Bitumenzusammensetzung, die durch Mischen von Bitumen mit einem Additivvorgemisch erhältlich ist, das
i) 20 bis 90 Gew.-% eines oder mehrerer Blockcopolymere aus einem vinylaromatischen Kohlenwasserstoff und einem konjugierten Dien, bezogen auf Gesamtadditiv,
ii) 1 bis 20 Gew.-% Kohlenstoffruß, bezogen auf Gesamtadditiv, und
iii) 10 bis 70 Gew.-% Mischhilfsmittel, bezogen auf Gesamtadditiv,
umfaßt, worin die Bitumenzusammensetzung gewünschtenfalls einen Füllstoff einschließen kann und worin die Gesamtmenge an i), ii) und iii) 100 Gew.-% des Additivvorgemisches nicht übersteigt.

2. Rahrbeschichtung nach Anspruch 1, worin die Bitumenzusammensetzung 20 bis 98 Gew.-% Bitumen, 5 bis 40 Gew.-% Additivvorgemisch und bis zu 50 Gew.-% Füllstoff umfaßt, jeweils bezogen auf die gesamte Bitumenzusammensetzung.

3. Rohrbeschichtung nach Anspruch 1 oder 2, umfassend eine Bitumenzusammensetzung mit einem Erweichungspunkt (bestimmt gemäß IP/58) von wenigstens 100°C und einem Fließwiderstand (bestimmt gemäß DIN 52123) von wenigstens 100°C.

4. Rohrbeschichtung nach einem der Ansprüche 1 bis 3, umfassend eine Bitumenzusammensetzung, worin der konjugierte Dienblock des Blockcopolymers hydriert ist.

5. Rohrbeschichtung nach Anspruch 4, umfassend eine Bitumenzusammensetzung, worin das Blockcopolymer ein scheinbares gewichtsmittleres Molekulargewicht von 80.000 bis 300.000 aufweist.

6. Rohrbeschichtung nach Anspruch 4 oder 5, umfassend eine Bitumenzusammensetzung, worin das Mischhilfsmittel ataktisches Polypropylen ist.

7. Rohrbeschichtung nach einem der Ansprüche 1 bis 3, umfassend eine Bitumenzusammensetzung, worin der konjugierte Dienblock des Blockcopolymers nicht hydriert ist.

8. Verfahren zur Herstellung eines beschichteten Rohres, umfassend
(a) ein Mischen von i) 1 bis 20 Gew.-% Kohlenstoffruß, ii) 20 bis 90 Gew.-% eines oder mehrerer Blockcopolymere eines vinylaromatischen Kohlenwasserstoffes mit einem konjugierten Dien und iii) 10 bis 70 Gew.-% eines Mischhilfsmittels,
(b) Mischen des in (a) erhaltenen Additivvorgemisches mit Bitumen und gegebenenfalls Füllstoff, und
(c) Anwenden der Bitumenzusammensetzung von Stufe (b) zum Beschichten eines Rohres.

9. Ein mit einer Beschichtung, wie in einem der Ansprüche 1 bis 7 beschrieben, beschichtetes Rohr.

## Revendications

1. Revêtement de tube comprenant une composition de bitume obtenable en mélangeant du bitume et un additif prémélangé comprenant,
i) de 20 à 90% en poids d'un ou plusieurs copolymères blocs d'un hydrocarbure vinyl aromatique et d'un diène conjugué par rapport à l'additif total,
ii) de 1 à 20% en poids de noir de carbone, par rapport à l'additif total, et
(iii) de 10 à 70% en poids d'un adjuvant de mélange, par rapport à l'additif total,
dans lequel la composition de bitume peut éventuellement comprendre une charge, et dans lequel la quantité totale de i), ii) et iii) n'excède pas 100% en poids de l'additif prémélangé.

2. Revêtement de tube suivant la revendication 1, dans lequel la composition de bitume comprend de 20 à 98% en poids de bitume, de 5 à 40% en poids d'un additif prémélangé, et jusqu'à 50% en poids d'une charge, tous pris par rapport à la composition de bitume totale.

3. Revêtement de tube suivant l'une ou l'autre des revendications 1 et 2, comprenant une composition de bitume ayant un point de ramollissement (mesuré suivant la méthode IP/58) d'au moins 100°C et une résistance à l'écoulement (mesurée suivant la méthode DIN 52123) d'au moins 100°C.

4. Revêtement de tube suivant l'une quelconque des revendications 1 à 3, comprenant une composition de bitume dans laquelle le bloc de diène conjugué du copolymère bloc est hydrogéné.

5. Revêtement de tube suivant la revendication 4, comprenant une composition de bitume dans laquelle le copolymère bloc a un poids moléculaire moyen pondéral apparent de 80.000 à 300.000.

6. Revêtement de tube suivant l'une ou l'autre des revendications 4 et 5, comprenant une composition de bitume dans laquelle l'adjuvant de mélange est du polypropylène atactique.

7. Revêtement de tube suivant l'une quelconque des revendications 1 à 3, comprenant une composition de bitume dans laquelle le bloc de diène conjugué des copolymères blocs est non hydrogéné.

8. Procédé de préparation d'un tube revêtu comprenant,
(a) le mélange i) de 1 à 20% en poids de noir de carbone, ii) de 20 à 90% en poids d'un ou plusieurs copolymères blocs d'un hydrocarbure vinyl aromatique et d'un diène conjugué, et iii) de 10 à 70% en poids d'un adjuvant de mélange,
(b) le mélange de l'additif prémélangé obtenu dans (a) avec du bitume et éventuellement une charge, et
(c) l'utilisation de la composition de bitume de l'étape (b) pour revêtir un tube.

9. Tube revêtu d'un revêtement tel que décrit dans l'une quelconque des revendications 1 à 7.
